# EUROPÄISCHE PATENTSCHRIFT

(11) **EP 3 391 723 B1**
(45) Veröffentlichungstag und Bekanntmachung des Hinweises auf die Patenterteilung: **13.01.2021**
(21) Anmeldenummer: 18166819.5
(22) Anmeldetag: 11.04.2018
(51) Int. Cl.: A01D 34/81, A01D 34/82, A01D 75/20

(54) **MÄHWERK**
MOWING DEVICE
MÉCANISME DE MOISSONNEUSE

(30) Priorität: 21.04.2017 DE 102017108502
(43) Veröffentlichungstag der Anmeldung: 24.10.2018
(73) Patentinhaber: CLAAS Saulgau GmbH, 88348 Bad Saulgau (DE)
(72) Erfinder: Ober, Martin, 78736 Epfendorf-Trichtingen (DE); Epp, Siegfried, 88436 Eberhardzell (DE); Neiss, Marco, 88518 Herbertingen (DE)

(56) Entgegenhaltungen:
- DE-A1-102013 111 669
- DE-U1-202010 012 789
- DE-U1-202011 101 223
- US-A- 5 279 100
- US-A1- 2005 050 695
- US-A1- 2011 225 779
- US-A1- 2013 232 732

## Beschreibung

Die Erfindung betrifft ein Mähwerk nach dem Oberbegriff des Anspruchs 1.

Aus US 2011/225 779 A1 ist eine Spannseilanordnung zum Befestigen einer Pickup-Abdeckplane oder eines anderen Objekts an einem Fahrzeug bekannt.

Aus der DE 20 2010 012 789 U1 ist der grundsätzliche Aufbau eines als Frontmähwerk ausgebildeten Mähwerks bekannt. Ein derartiges Mähwerk verfügt über ein Mähwerktraggestell sowie über mehrere am Mähwerktraggestell aufgenommene Mähorgane, die umlaufend angetrieben werden. Ferner verfügt ein solches Mähwerk über eine Schutzeinrichtung aus Schutzabdeckungen sowie aus an den Schutzabdeckungen angreifenden Schutzbügeln. So verfügt das Mähwerk nach der DE 20 2010 012 789 U1 über zwei seitliche Schutzabdeckungen, die relativ zu einer mittleren Schutzabdeckung um eine sich in Fortbewegungsrichtung oder annähernd in Fortbewegungsrichtung erstreckende Achse zwischen einer Arbeitsstellung und einer Transportstellung verlagerbar sind, wobei zusammen mit der Verlagerung der seitlichen Schutzabdeckungen relativ zur mittleren Schutzabdeckung auch die seitlichen Schutzbügel sowie nicht gezeigte seitliche Schutztücher verlagert werden. Durch das Verlagern der seitlichen Schutzabdeckungen zusammen mit den seitlichen Schutzbügeln und den seitlichen Schutztüchern in die Transportstellung, kann die Breite des Mähwerks verkleinert werden, um dasselbe mit einem Traktor auf öffentlichen Verkehrswegen zu transportieren. Hierbei besteht das Problem, dass die seitlichen Schutztücher flattern und eine Gefahrenquelle für andere Verkehrsteilnehmer darstellen können.

Aus der DE 10 2013 111 669 A1 ist ein weiteres Mähwerk bekannt, welches als Heckmähwerk oder auch als Frontmähwerk ausgebildet sein kann. Bei diesem Mähwerk sind seitliche Schutzabdeckungen zusammen mit an den seitlichen Schutzabdeckungen angreifenden seitlichen Schutzbügeln sowie seitlichen Schutztüchern um sich im Wesentlichen in vertikaler Richtung erstreckende Achsen verlagerbar, um in der Transportstellung eine Transportbreite zu verringern.

Hiervon ausgehend liegt der vorliegenden Erfindung die Aufgabe zugrunde, ein neuartiges Mähwerk zu schaffen.

Diese Aufgabe wird durch ein Mähwerk nach Anspruch 1 gelöst.

Das erfindungsgemäße Mähwerk weist Spanneinrichtungen auf, über welche die seitlichen Schutztücher in der Transportstellung der jeweiligen seitlichen Schutzabdeckung spannbar sind, um ein Flattern der seitlichen Schutztücher bei einer Fahrt in Transportstellung zu vermeiden.

Mit der Erfindung wird vorgeschlagen, dass die Spanneinrichtungen des Mähwerks die seitlichen Schutztücher in der Transportstellung der jeweiligen seitlichen Schutzabdeckung spannen. Hiermit kann vermieden werden, dass die seitlichen Schutztücher bei einer Fahrt in Transportstellung flattern und so eine Gefahrenquelle für andere Verkehrsteilnehmer darstellen.

Vorzugsweise wirkt mit jeder der beiden seitlichen Schutzabdeckungen und damit mit jedem der beiden seitlichen Schutztücher jeweils eine Spanneinrichtung zusammen, um durch Spannen des jeweiligen seitlichen Schutztuchs ein Flattern desselben bei einer Fahrt in Transportstellung zu vermeiden. Dies ist bevorzugt, um im Bereich beider Seiten in der Transportstellung des Mähwerks ein Flattern der seitlichen Schutztücher zu vermeiden.

Nach einer ersten Variante der Erfindung ist die jeweilige Spanneinrichtung als zugfederartige Expander-Einrichtung ausgebildet, die mit einem ersten Ende fest, d.h. dauerhaft an der mittleren Schutzabdeckung oder einem mittleren Schutzbügel oder am Mähwerkstraggestell des Mähwerks angreift bzw. fixiert ist, und die mit einem zweiten Ende dann an das jeweilige seitliche Schutztuch anbindbar ist, wenn das jeweilige seitliche Schutztuch über die jeweilige seitliche Schutzabdeckung die Transportstellung einnimmt. Vorzugsweise ragt die jeweilige zugfederartige Expander-Einrichtung mit dem ersten Ende in den mittleren Schutzbügel hinein und mit dem zweiten Ende aus dem mittleren Schutzbügel heraus. Die erste vorteilhafte Weiterbildung der Erfindung kommt insbesondere dann zum Einsatz, wenn das Spannen der Schutztücher in der Transportstellung der Schutzabdeckungen von Hand bzw. manuell erfolgen soll, nämlich durch manuelle Betätigung der zugfederartigen Expander-Einrichtungen.

Nach einer zweiten, alternativen Variante der Erfindung weist die jeweilige Spanneinrichtung vorzugsweise eine Zugfeder, ein Zugkraftübertragungselement und ein am jeweiligen seitlichen Schutztuch befestigtes, relativ zur jeweiligen seitlichen Schutzabdeckung klappbares Spannelement auf. Vorzugsweise greift die Zugfeder einem ersten Ende fest an am Mähwerkstraggestell an, wobei ein zweites Ende der Zugfeder fest an einem ersten Ende des Zugkraftübertragungselements angreift, und wobei ein zweites Ende des Zugkraftübertragungselements fest an dem am jeweiligen seitlichen Schutztuch befestigten Spannelement angreift. Vorzugsweise ist das an dem jeweiligen seitlichen Schutztuch befestigte Element um ein Scharnier relativ zur jeweiligen seitlichen Schutzabdeckung klappbar. Die zweite, alternative vorteilhafte Weiterbildung der Erfindung kommt insbesondere dann zum Einsatz, wenn ein automatisches Spannen der seitlichen Schutztücher bei der Überführung der Schutzabdeckungen aus der Arbeitsstellung in die Transportstellung erfolgen soll.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht eines Mähwerks in Arbeitsstellung;
- Fig. 2: das Detail II der Fig. 1;
- Fig. 3: das Detail III der Fig. 1 in einer gegenüber Fig. 1 gedrehten perspektivischen Ansicht in Arbeitsstellung;
- Fig. 4: das Detail der Fig. 3 in Transportstellung;
- Fig. 5: ein alternatives Detail zum Detail III in Arbeitsstellung;
- Fig. 6: das Detail der Fig. 5 in Transportstellung;
- Fig. 7: ein weiteres alternatives Detail zum Detail III in Arbeitsstellung;
- Fig. 8: das Detail der Fig. 5 in Transportstellung.

Die Erfindung betrifft ein Mähwerk, welches dem Mähen von insbesondere Gras dient.

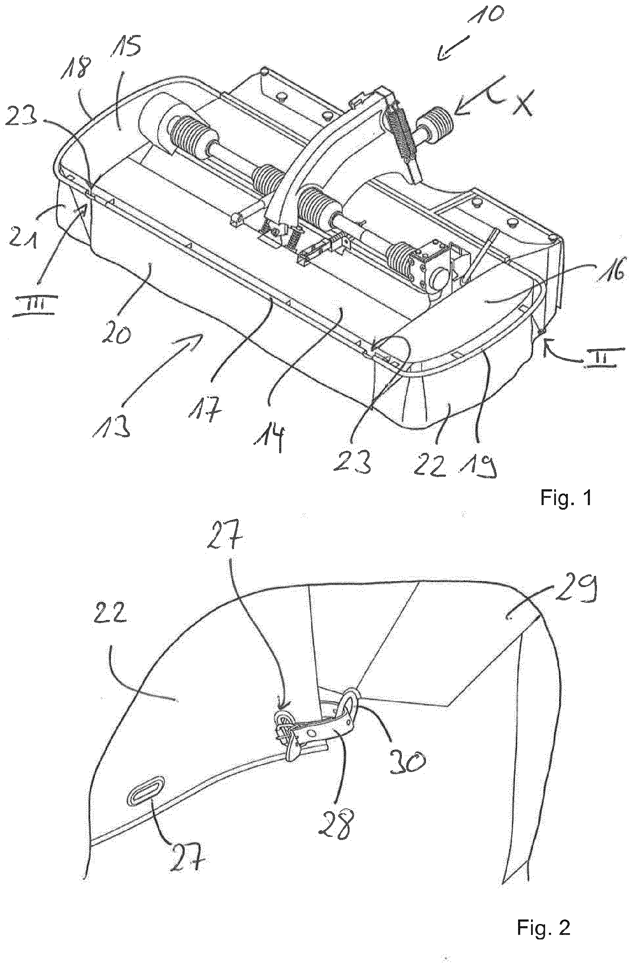

Fig. 1 zeigt eine perspektivische Ansicht eines als Frontmähwerk ausgebildeten Mähwerks 10.

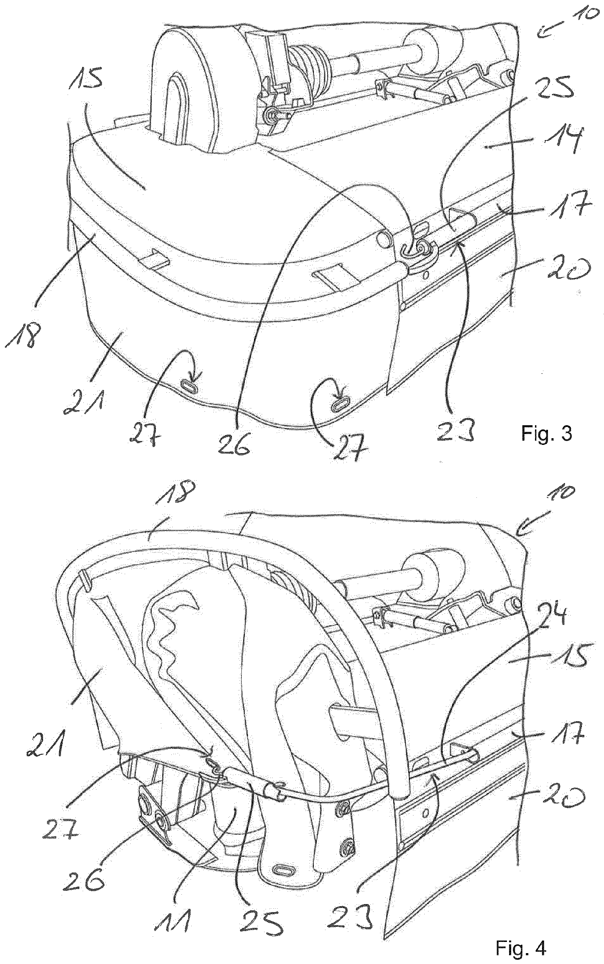

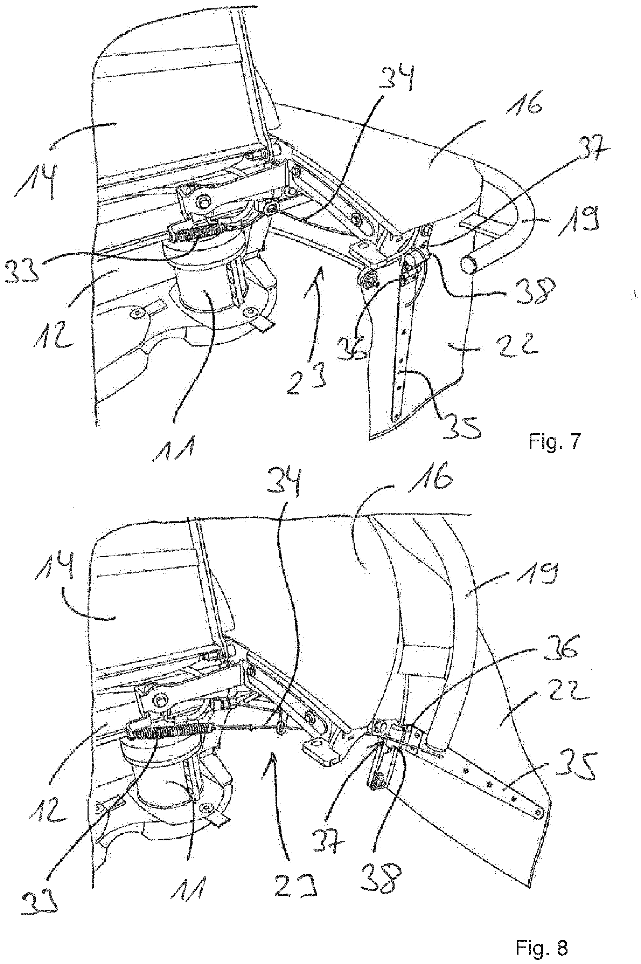

Ein solches Mähwerk 10 verfügt über ein Mähwerkgestell, an welchem mehrere Mähorgane aufgenommen sind. Das Mähwerkgestell sowie die Mähorgane sind in Fig. 1 nicht sichtbar. In Fig. 4, 6 und 8 ist jedoch jeweils ein Mähorgan 11 gezeigt, welches an einem in Fig. 8 sichtbaren Mähwerktraggestells 12 angreift bzw. von demselben drehbar aufgenommen ist.

Fig. 1 zeigt eine Schutzeinrichtung 13, welche das Mähwerktraggestell 12 sowie die vom Mähwerktraggestell 12 aufgenommenen Mähorgane 11 abdeckt, wobei die Schutzeinrichtung 13 mehrere Schutzabdeckungen, vorzugsweise mehrere Schutzbügel sowie mehrere Schutztücher aufweist.

So zeigt Fig. 1 eine mittlere Schutzabdeckung 14 und zwei seitliche Schutzabdeckungen 15, 16, wobei die beiden seitlichen Schutzabdeckungen 15, 16 relativ zur mittleren Schutzabdeckung 14 um eine sich in Fortbewegungsrichtung bzw. in Mährichtung X oder sich annähernd in Fortbewegungsrichtung oder Mährichtung X erstreckende, horizontal verlaufende Achse zwischen der in Fig. 1 gezeigten Arbeitsstellung und einer Transportstellung verlagerbar sind.

An der mittleren Schutzabdeckung 14 greift vorzugsweise ein mittlerer Schutzbügel 17 an. An den seitlichen Schutzabdeckungen 15, 16 greifen vorzugsweise seitliche Schutzbügel 18, 19 an. Ferner greift an der mittleren Schutzabdeckung 14 ein mittleres Schutztuch 20 an, wobei an den seitlichen Schutzabdeckungen 15, 16 seitliche Schutztücher 21, 22 angreifen.

Die seitlichen Schutzbügel 18, 19 sowie die seitlichen Schutztücher 21, 22 sind bei der Verlagerung der seitlichen Schutzabdeckungen 15, 16 zwischen der Arbeitsstellung und der Transportstellung zusammen mit den seitlichen Schutzabdeckungen 15, 16 relativ zur mittleren Schutzabdeckung 14 verlagerbar, nämlich um die sich in Fortbewegungsrichtung oder annähernd in Fortbewegungsrichtung erstreckende, horizontal verlaufende Achse nach oben klappbar.

Um zu verhindern, dass bei einer Fahrt des an einen Traktor angekoppelten Mähwerks in der Transportstellung des Mähwerks die zusammen mit den seitlichen Schutzabdeckungen 15, 16 nach oben geklappten seitlichen Schutztücher 21, 22 im Wind flattern und so eine Gefahrenquelle für andere Verkehrsteilnehmer darstellen, wird erfindungsgemäß vorgeschlagen, dass das Mähwerk 10 Spanneinrichtungen 23 aufweist, über welche die seitlichen Schutztücher 21, 22 in der Transportstellung der jeweiligen seitlichen Schutzabdeckung 21, 22 spannbar sind, über die ein Flattern der seitlichen Schutztücher 21, 22 bei einer Fahrt in der Transportstellung der seitlichen Schutzabdeckungen 15, 16 vermieden wird.

Mit jeder der seitlichen Schutzabdeckungen 15, 16 und damit mit jedem der beiden seitlichen Schutztücher 21, 22 wirkt dabei jeweils eine solche Spanneinrichtung 23 zusammen, um durch Spannen des jeweiligen seitlichen Schutztuchs 21 bzw. 22 ein Flattern desselben bei einer Fahrt in Transportstellung zu vermeiden.

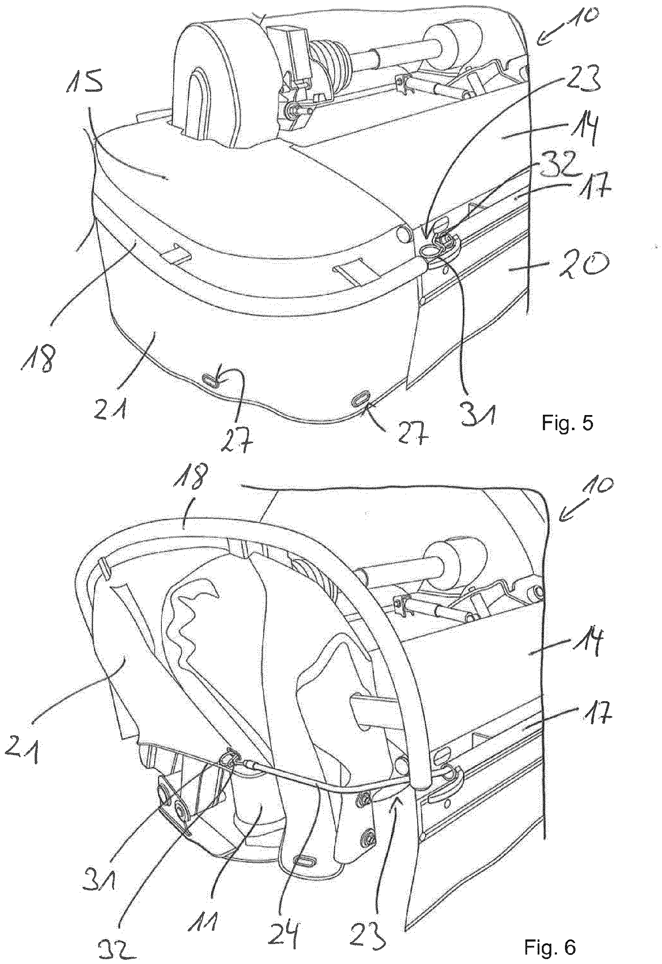

Konstruktive Details von Spanneinrichtungen 23 in unterschiedlichen konstruktiven Ausführungen werden nachfolgend unter Bezugnahme auf Fig. 2 bis 8 im Detail beschrieben, wobei Fig. 3, 4 ein erstes Ausführungsbeispiel einer Spanneinrichtung 23 zeigt, wobei Fig. 5, 6 ein zweites Ausführungsbeispiel einer erfindungsgemäßen Spanneinrichtung 23 zeigt, und wobei Fig. 7, 8 ein drittes Ausführungsbeispiel einer erfindungsgemäßen Spanneinrichtung 23 zeigt. Das Detail der Fig. 2 kann bei allen Spanneinrichtungen 23 der Fig. 3, 4 und Fig.5, 6 und Fig. 7, 8 zum Einsatz kommen.

Ein erstes Ausführungsbeispiel eines Mähwerks 10 mit einer ersten Spanneinrichtung 23 zeigen Fig. 3 und 4. Im Ausführungsbeispiel der Fig. 3 und 4 umfasst die jeweilige Spanneinrichtung 23 eine zugfederartige Expander-Einrichtung 24 (siehe Fig. 4), die mit einem ersten Ende vorzugsweise dauerhaft an der mittleren Schutzabdeckung 15 oder dem mittleren Schutzbügel 17 oder am Mähwerktraggestell 12 fixiert ist, und die mit einem zweiten Ende an das jeweilige seitliche Schutztuch 21 bzw. 22 anbindbar ist. Im gezeigten Ausführungsbeispiel der Fig. 3 und 4 ragt die jeweilige zugfederartige Expander-Einrichtung 24 mit ihrem ersten Ende in den mittleren Schutzbügel 17 hinein und ist mit diesem ersten Ende innerhalb dieses mittleren Schutzbügels 17 fest montiert bzw. bleibend fixiert.

Die jeweilige zugfederartige Expander-Einrichtung 24 ragt mit einem zweiten Ende aus dem mittleren Schutzbügel 17 heraus, wobei an diesem aus dem mittleren Schutzbügel 17 herausragenden zweiten Ende der Expander-Einrichtung 24 ein Griffstück 25 mit einem Befestigungshaken 26 angreift.

Dann, wenn das in Fig. 3 gezeigte seitliche Schutztuch 21 über die gezeigte seitliche Schutzabdeckung 15 aus der in Fig. 3 gezeigten Arbeitsstellung in die in Fig. 4 gezeigte Transportstellung nach oben geklappt ist, kann durch Ziehen am Griffstück 25 das zweite Ende der Expander-Einrichtung 24 der Spanneinrichtung 23 weiter aus dem mittleren Schutzbügel 17 herausgezogen und mit dem Befestigungshaken 26 am jeweiligen seitlichen Schutztuch 21 befestigt werden, nämlich durch Einführen des Befestigungshakens 26 in eine Befestigungsöse 27 des jeweiligen seitlichen Schutztuchs 21. Die Federkraft der Expander-Einrichtung 24 spannt dann das jeweilige seitliche Schutztuch 21 und verhindert, dass dasselbe bei einer Fahrt in Transportstellung flattert.

Vorzugsweise werden die links und rechts für die Schutztücher 21, 22 vorgesehenen Griffstücke 25 über eine zugfederartige Expander-Einrichtung 24 miteinander verbunden, die innerhalb des mittleren Schutzbügels 17 verläuft. Bei dieser bevorzugten Ausführungsform müssen keine separaten Fixierungen für die jeweiligen ersten Enden der Expander-Einrichtung 24 vorgesehen werden, da die Griffstücke 25 selbst jeweils ein Gegenlager für die andere Seite bilden.

Am gegenüberliegenden, einem Traktor zugewandten Ende ist das jeweilige seitliche Schutztuch 21, 22 über ein riemenartiges Element 28 an einem Gehäuseabschnitt 29 des Mähwerks 10 festgelegt (Fig. 1 und 2), wobei sich das riemenartige Element 28 sowohl durch eine Befestigungsöse 30 des Gehäuseabschnitts 29 sowie durch eine Befestigungsöse 27 im jeweiligen seitlichen Schutztuch 21, 22 erstreckt. Beim Spannen des jeweiligen seitlichen Schutztuchs 21, 22 über die jeweilige Spanneinrichtung 23 wird so das jeweilige seitliche Schutztuch 21, 22 an dem Gehäuseabschnitt 29 des Mähwerks 10 gehalten, um dasselbe um seine gesamte seitliche Länge straff zu spannen. Selbstverständlich kann das Schutztuch 21, 22 alternativ auch durch andere Mittel am Gehäuseabschnitt 29 fixiert werden.

Ein zweites Ausführungsbeispiel eines Mähwerks 10 mit Spanneinrichtungen 23, die zugfederartige Expander-Einrichtungen 24 aufweisen, zeigen Fig. 5 und 6. Das Ausführungsbeispiel der Fig. 5 und 6 unterscheidet sich vom Ausführungsbeispiel der Fig. 3 und 4 lediglich dadurch, dass an dem zweiten, aus dem mittleren Schutzbügel 17 herausragenden Ende der zugfederartigen Expander-Einrichtung 24 kein Griffstück mit einem Befestigungshaken angreift, sondern vielmehr ein Fingerring 31 mit einem Befestigungshaken 32.

Mit dem Fingerring 31 kann die Expander-Einrichtung 24 der jeweiligen Spanneinrichtung 23 ergriffen und weiter aus dem mittleren Schutzbügel 17 herausgezogen werden, um die jeweilige Spanneinrichtung 23 über den Befestigungshaken 32 in einer Befestigungsöse 27 des jeweiligen Schutztuchs 21 zu verankern und so letztendlich das jeweilige seitliche Schutztuch in der Transportstellung der jeweiligen seitlichen Schutzabdeckung zu spannen.

Die Ausführungsbeispiele der Fig. 3, 4 bzw. der Fig. 5, 6 erfordern eine manuelle Betätigung der Spanneinrichtungen 23, nämlich dann, wenn die seitlichen Schutzabdeckungen 15, 16 in die Transportstellung nach oben (siehe Fig. 4, 6) geklappt sind. In diesem Fall wird durch manuelle Betätigung der jeweiligen Spanneinrichtung 23 das jeweilige zusammen mit der jeweiligen seitlichen Schutzabdeckung 15, 16 nach oben geklappte seitliche Schutztuch 21, 22 über die jeweilige Spanneinrichtung 23 gespannt, indem der jeweilige Befestigungshaken in eine Befestigungsöse des jeweiligen seitlichen Schutztuchs 21, 22 eingehängt wird.

Fig. 7, 8 zeigen ein weiteres Ausführungsbeispiel eines erfindungsgemäßen Mähwerks 10 bei geöffneter mittlerer Schutzabdeckung 14, wobei sich das Ausführungsbeispiel der Fig. 7, 8 insbesondere zum automatischen Spannen des jeweiligen seitlichen Schutztuchs 21, 22, eignet.

Die Spanneinrichtung 23 der Fig. 7, 8 verfügt vorzugsweise über eine Zugfeder 33, ein Zugkraftübertragungselement 34 sowie ein am jeweiligen seitlichen Schutztuch 21 bzw. 22 befestigtes, relativ zur jeweiligen seitlichen Schutzabdeckung 15, 16 klappbares Spannelement 35. Die Zugfeder 33 greift mit einem ersten Ende fest am Mähwerktraggestell 12 an, ein zweites Ende der Zugfeder 33 ist mit einem ersten Ende des Zugkraftübertragungselements 34 verbunden. Ein zweites Ende des Zugkraftübertragungselements 34 greift fest an dem Spannelement 35 an, welches mit dem jeweiligen Schutztuch 22 fest verbunden ist und gegenüber der jeweiligen seitlichen Schutzabdeckung 15 bzw. 16 klappbar ist.

Dann, wenn wie in Fig. 7 gezeigt, die jeweilige seitliche Schutzabdeckung 15, 16 in die Arbeitsstellung nach unten geschwenkt ist, wird über die Zugfeder 33 keine Kraft auf das jeweilige Zugkraftübertragungselement 34 und damit keine Kraft auf das jeweilige Spannelement 35 ausgeübt.

Dann hingegen, wenn wie in Fig. 8 gezeigt, die jeweilige seitliche Schutzabdeckung 15 bzw. 16 nach oben in die Transportstellung verschwenkt wird, wird infolge der fest definierten Länge des Zugkraftübertragungselements 34 die Zugfeder 33 gespannt und dieselbe übt eine Kraft auf das mit dem jeweiligen seitlichen Schutztuch gekoppelte Spannelement 35 aus, welches dann in Richtung auf die mittlere Schutzabdeckung 14 um ein Scharnier 36 verschwenkt wird, wodurch letztendlich das jeweilige seitliche Schutztuch 21, 22 gespannt wird.

Das an dem jeweiligen seitlichen Schutztuch 21, 22 befestigte Spannelement 35 ist demnach um das jeweilige Scharnier 36 relativ zur relativ seitlichen Schutzabdeckung 15, 16 klappbar. Das jeweilige Zugkraftübertragungselement 34, welches mit dem ersten Ende an der Zugfeder 33 und dem zweiten Ende an dem Spannelement 35 angreift, erstreckt sich durch eine Ausnehmung 37 an der jeweiligen seitlichen Schutzabdeckung 15, 16 und/oder im Schutztuch 21, 22 hindurch und ist gemäß Fig. 7 und 8 vorzugsweise benachbart zum Scharnier 36 an einer Umlenkrolle 38 geführt. Selbstverständlich sind statt einer Umlenkrolle 38 auch andere Umlenk-Elemente möglich.

In der Transportstellung der Fig. 8 zieht das jeweilige Zugkraftübertragungselement 34 am jeweiligen Spannelement 35 und spannt so das in Fig. 8 gezeigte seitliche Schutztuch 22. Dieses Spannen erfolgt durch Klappen bzw. Schwenken des Spannelements 35 um das Scharnier 36, wobei die hierzu benötigte Kraft durch die Zugfeder 33 bereitgestellt und durch das Zugkraftübertragungselement 34 übertragen wird.

Das Zugkraftübertragungselement 34 kann seilartig oder drahtartig oder kettenartig ausgebildet sein. Das Zugkraftübertragungselement 34 kann - bei Weglassen der Zugfeder 33 - alternativ direkt am Mähwerktraggestell 12 oder einem anderen feststehenden Maschinenelement fixiert werden. In diesem Fall muss die Länge des Zugkraftübertragungselements 34 ganz exakt auf die Einbaulage abgestimmt werden, damit es das Spannelement 35 ausreichend vorspannt.

In der Arbeitsstellung der Fig. 7 ist das seitliche Schutztuch 22 ungespannt und auch das Zugkraftübertragungselement 34 hängt ohne Kraftübertragung ausgehend von der Zugfeder 33 schlaff durch.

Bei der Variante der Fig. 7, 8 kommt auch das Detail der Fig. 2 zum Einsatz, um sicherzustellen, dass das jeweilige seitliche Schutztuch 22 über seine gesamte Länge gespannt werden kann.

Beim Ausführungsbeispiel der Fig. 7, 8 wird das jeweilige seitliche Schutztuch 21, 22 dann automatisch gespannt, wenn die jeweilige seitliche Schutzabdeckung 15, 16 aus der Arbeitsstellung in die Transportstellung verschwenkt wird. Zum Spannen des jeweiligen seitlichen Schutztuchs 21, 22 ist dann demnach keine manuelle Betätigung erforderlich. Diese Ausführung ist insbesondere dann von Vorteil, wenn die seitlichen Schutzabdeckungen 15, 16 zum Beispiel durch einen Aktor, wie z.B. eine Hydraulik, relativ zur mittleren Schutzabdeckung 14 verschwenkt werden können.

Die Ausführungsbeispiele der Fig. 3, 4 und der Fig. 5, 6 sind konstruktiv einfacher, erfordern jedoch eine manuelle Betätigung. Diese ist jedoch mit geringem Aufwand einfach und zuverlässig möglich. In den Ausführungsbeispielen der Fig. 3, 4 und Fig. 5, 6 ist die jeweilige zugfederartige Expander-Einrichtung 24 der jeweiligen Spanneinrichtung 23 vollständig in den vorderen, mittleren Schutzbügel 17 integriert. Dieselbe muss demnach in der Arbeitsstellung nicht durch zusätzlichen Baugruppen vor einer Beschädigung geschützt werden.

Durch die dauerhafte Anbindung des ersten Endes der Expander-Einrichtung 24 - insbesondere bei Integration in den mittleren Schutzbügel 17 - kann diese nicht verloren gehen und der Bediener kann das jeweilige Schutztuch 21, 22 vorteilhaft einfach mit einem einzigen Handgriff sichern und entsichern, da das andere Ende bleibend fixiert ist. Darüber hinaus kann auf eine separate Parkstation für die Expander-Einrichtung 24 verzichtet werden.

### Bezugszeichenliste

- 10: Mähwerk
- 12: Mähwerktraggestell
- 11: Mähorgan
- 13: Schutzeinrichtung
- 14: mittlere Schutzabdeckung
- 15: seitliche Schutzabdeckung
- 16: seitliche Schutzabdeckung
- 17: mittlerer Schutzbügel
- 18: seitlicher Schutzbügel
- 19: seitlicher Schutzbügel
- 20: mittleres Schutztuch
- 21: seitliches Schutztuch
- 22: seitliches Schutztuch
- 23: Spanneinrichtung
- 24: Expander-Einrichtung
- 25: Griffstück
- 26: Befestigungshaken
- 27: Befestigungsöse
- 28: Befestigungsriemen
- 29: Gehäuseabschnitt
- 30: Befestigungsöse
- 31: Fingerring
- 32: Befestigungshaken
- 33: Federelement
- 34: Zugkraftübertragungselement
- 35: Element
- 36: Scharnier
- 37: Ausnehmung
- 38: Umlenkrolle

## Patentansprüche

1. Mähwerk (10),
mit einem Mähwerktraggestell (12),
mit mehreren am Mähwerktraggestell (12) aufgenommenen Mähorganen (11),
mit einer Schutzeinrichtung (13), die Schutzabdeckungen (14, 15, 16) und an den Schutzabdeckungen angreifende Schutztücher (20, 21, 22) aufweist,
wobei seitliche Schutzabdeckungen (15, 16) zusammen mit seitlichen Schutztüchern (21, 22) gegenüber einer mittleren Schutzabdeckung (14) um eine sich in einer Fortbewegungsrichtung bzw. Mährichtung oder annährend in Fortbewegungsrichtung bzw. Mährichtung erstreckende Achse zwischen einer Arbeitsstellung und einer Transportstellung verlagerbar sind,
**gekennzeichnet durch**
Spanneinrichtungen (23), über welche die seitlichen Schutztücher (21, 22) in der Transportstellung der jeweiligen seitlichen Schutzabdeckung (15, 16) spannbar sind, um ein Flattern der seitlichen Schutztücher (21, 22) bei einer Fahrt in Transportstellung zu vermeiden, wobei
die jeweilige Spanneinrichtung (23) eine zugfederartige Expander-Einrichtung (24) aufweist, die mit einem ersten Ende bleibend an der mittleren Schutzabdeckung (14) oder einem mittleren Schutzbügel (17) oder am Mähwerkstraggestell (12) fixiert ist, und die mit einem zweiten Ende dann an das jeweilige seitliche Schutztuch (21, 22) anbindbar ist, wenn die jeweilige seitliche Schutzabdeckung (15, 16) die Transportstellung einnimmt oder
die jeweilige Spanneinrichtung (23) ein Zugkraftübertragungselement (34) und ein am jeweiligen seitlichen Schutztuch (21, 22) befestigtes, relativ zur jeweiligen seitlichen Schutzabdeckung (15, 16) klappbares Spannelement (35) aufweist.

2. Mähwerk nach Anspruch 1, **dadurch gekennzeichnet, dass** mit jeder der beiden seitlichen Schutzabdeckungen (15, 16) und damit mit jedem der beiden seitlichen Schutztücher (21, 22) jeweils eine Spanneinrichtung (23) zusammenwirkt, um durch Spannen des jeweiligen seitlichen Schutztuchs (21, 22) ein Flattern desselben bei einer Fahrt in Transportstellung zu vermeiden.

3. Mähwerk nach Anspruch 1, **dadurch gekennzeichnet, dass** die jeweilige zugfederartige Expander-Einrichtung (24) mit dem ersten Ende in den mittleren Schutzbügel (17) hineinragt und mit dem zweiten Ende aus dem mittleren Schutzbügel (17) herausragt.

4. Mähwerk nach Anspruch 1 oder 3, **dadurch gekennzeichnet, dass** die zugfederartige Expander-Einrichtung (24) innerhalb des mittleren Schutzbügels (17) verläuft und an den Enden des Schutzbügels (17), insbesondere durch Griffstücke (25) oder durch Fingerringe (31), fixiert ist.

5. Mähwerk nach Anspruch 1, **dadurch gekennzeichnet, dass** eine Zugfeder (33) vorgesehen ist, die mit einem ersten Ende fest am Mähwerktraggestell (12) angreift und ein zweites Ende der Zugfeder (33) fest an einem ersten Ende des Zugkraftübertragungselements (34) angreift, und dass ein zweites Ende des Zugkraftübertragungselements (34) fest an dem am jeweiligen seitlichen Schutztuch (21, 22) befestigten Spannelement (35) angreift.

6. Mähwerk nach Anspruch 1 oder 5, **dadurch gekennzeichnet, dass** das an dem jeweiligen seitlichen Schutztuch (21, 22) befestigte Spannelement (35) um ein Scharnier (36) relativ zur jeweiligen seitlichen Schutzabdeckung (15, 16) klappbar ist.

7. Mähwerk nach einem der Ansprüche 1 bis 6, **dadurch gekennzeichnet, dass** sich das Zugkraftübertragungselement (34) durch eine Ausnehmung (37) in der jeweiligen seitlichen Schutzabdeckung (15, 16) und/oder im jeweiligen seitlichen Schutztuch (21, 22) erstreckt und vorzugsweise an einer benachbart zum Scharnier (37) positionierten Umlenkrolle (38) geführt ist.

8. Mähwerk nach einem der Ansprüche 1 bis 7, **dadurch gekennzeichnet, dass** das Zugkraftübertragungselement (34) seilartig oder drahtartig oder kettenartig ausgebildet ist.

## Claims

1. Mower (10)
having a mower-carrying framework (12),
having a plurality of mowing mechanisms (11), which are accommodated on the mower-carrying framework (12),
having a protective device (13), which has protective coverings (14, 15, 16) and protective aprons (20, 21, 22) acting on the protective coverings,
wherein lateral protective coverings (15, 16), together with lateral protective aprons (21, 22), can be displaced in relation to a central protective covering (14), between an operating position and a transportation position, about an axis which extends in an advancement direction or mowing direction or more or less in an advancement direction or mowing direction,
**characterized by**
bracing devices (23), via which it is possible to brace the lateral protective aprons (21, 22) in the transportation position of the respective lateral protective covering (15, 16), in order to avoid flapping of the lateral protective aprons (21, 22) in the transportation position during travel, wherein
the respective bracing device (23) has a tension-spring-like expander device (24), which, by way of a first end, is fixed permanently on the central protective covering (14) or a central protective bracket (17), or on the mower-carrying framework (12), and, by way of a second end, can then be attached to the respective lateral protective apron (21, 22) when the respective lateral protective covering (15, 16) assumes the transportation position, or
the respective bracing device (23) has a tensile-force-transmission element (34) and a bracing element (35), which is fastened on the respective lateral protective apron (21, 22) and can be swung relative to the respective lateral protective covering (15, 16).

2. Mower according to Claim 1, **characterized in that** a respective bracing device (23) interacts with each of the two lateral protective coverings (15, 16), and therefore with each of the two lateral protective aprons (21, 22), in order that bracing of the respective lateral protective apron (21, 22) avoids flapping of the same in the transportation position during travel.

3. Mower according to Claim 1, **characterized in that** the respective tension-spring-like expander device (24) projects, by way of the first end, into the central protective bracket (17) and, by way of the second end, out of the central protective bracket (17).

4. Mower according to Claim 1 or 3, **characterized in that** the tension-spring-like expander device (24) runs within the central protective bracket (17) and is fixed at the ends of the protective bracket (17), in particular by grip pieces (25) or by finger rings (31).

5. Mower according to Claim 1, **characterized in that** a tension spring (33) is provided, said spring acting firmly, by way of a first end, on the mower-carrying framework (12), and a second end of the tension spring (33) acting firmly at a first end of the tensile-force-transmission element (34), and **in that** a second end of the tensile-force-transmission element (34) acts firmly on the bracing element (35), which is fastened on the respective lateral protective apron (21, 22).

6. Mower according to Claim 1 or 5, **characterized in that** the bracing element (35), which is fastened on the respective lateral protective apron (21, 22), can be swung about a hinge (36) relative to the respective lateral protective covering (15, 16).

7. Mower according to one of Claims 1 to 6, **characterized in that** the tensile-force-transmission element (34) extends through an aperture (37) in the respective lateral protective covering (15, 16) and/or in the respective lateral protective apron (21, 22) and is guided preferably on a deflecting roller (38), which is positioned adjacent to the hinge (37).

8. Mower according to one of Claims 1 to 7, **characterized in that** the tensile-force-transmission element (34) is designed in a cable-like or wire-like or chain-like manner.

## Revendications

1. Barre de coupe (10), comprenant
un cadre porteur de barre de coupe (12),
plusieurs éléments de coupe (11) reçus sur le cadre porteur de barre de coupe (12),
un dispositif de protection (13) qui présente des capots de protection (14, 15, 16) et des toiles de protection (20, 21, 22) appliquées aux capots de protection,
dans laquelle des capots de protection latéraux (15, 16), conjointement avec des toiles de protection latérales (21, 22), peuvent être décalés par rapport à un capot de protection central (14) autour d'un axe s'étendant dans une direction de déplacement ou une direction de coupe ou approximativement dans la direction de déplacement ou la direction de coupe entre une position de travail et une position de transport,
**caractérisée par** des dispositifs de serrage (23) permettant de serrer les toiles de protection latérales (21, 22) dans la position de transport du capot de protection latéral (15, 16) respectif afin d'éviter un flottement des toiles de protection latérales (21, 22) lors d'un déplacement dans la position de transport, dans laquelle
le dispositif de serrage (23) respectif présente un dispositif expanseur (24) de type ressort de traction qui est fixé à demeure par une première extrémité au capot de protection central (14) ou à un arceau de protection central (17) ou au cadre porteur de barre de coupe (12), et qui peut ensuite être attaché par une deuxième extrémité à la toile de protection latérale (21, 22) respective si le capot de protection latéral (15, 16) respectif adopte la position de transport, ou
le dispositif de serrage (23) respectif présente un élément de transmission de force de traction (34) et un élément de serrage (35) fixé à la toile de protection latérale (21, 22) respective, rabattable par rapport au capot de protection latéral (15, 16) respectif.

2. Barre de coupe selon la revendication 1, **caractérisée en ce qu'**un dispositif de serrage (23) coopère avec chacun des deux capots de protection latéraux (15, 16) et donc avec chacune des deux toiles de protection latérales (21, 22) respectivement afin d'éviter par le serrage de la toile de protection latérale (21, 22) respective un flottement de ces éléments pendant le déplacement dans la position de transport.

3. Barre de coupe selon la revendication 1, **caractérisée en ce que** le dispositif expanseur (24) de type ressort de traction respectif fait saillie dans l'arceau de protection central (17) par la première extrémité et fait saillie hors de l'arceau de protection central (17) par la deuxième extrémité.

4. Barre de coupe selon la revendication 1 ou 3, **caractérisée en ce que** le dispositif expanseur (24) de type ressort de traction s'étend à l'intérieur de l'arceau de protection central (17) et est fixé aux extrémités de l'arceau de protection (17), en particulier par des poignées (25) ou des anneaux (31).

5. Barre de coupe selon la revendication 1, **caractérisée en ce qu'**un ressort de traction (33) est prévu qui s'applique par une première extrémité solidement au cadre porteur de barre de coupe (12), et une deuxième extrémité du ressort de traction (33) s'applique à une première extrémité de l'élément de transmission de force de traction (34), et **en ce qu'**une deuxième extrémité de l'élément de transmission de force de traction (34) s'applique solidement à l'élément de serrage (35) fixé à la toile de protection latérale (21, 22) respective.

6. Barre de coupe selon la revendication 1 ou 5, **caractérisée en ce que** l'élément de serrage (35) fixé à la toile de protection latérale (21, 22) respective est rabattable au niveau d'une charnière (36) par rapport au capot de protection latéral (15, 16) respectif.

7. Barre de coupe selon l'une quelconque des revendications 1 à 6, **caractérisée en ce que** l'élément de transmission de force de traction (34) s'étend à travers un évidement (37) dans le capot de protection latéral (15, 16) respectif et/ou dans la toile de protection latérale (21, 22) respective et est guidé de préférence au niveau d'une poulie de renvoi (38) positionnée à côté de la charnière (37).

8. Barre de coupe selon l'une quelconque des revendications 1 à 7, **caractérisée en ce que** l'élément de transmission de force de traction (34) est réalisé à la manière d'un câble ou d'un fil métallique ou d'une chaîne.
